# EUROPÄISCHE PATENTSCHRIFT

(11) **EP 0 512 963 B1**
(45) Veröffentlichungstag und Bekanntmachung des Hinweises auf die Patenterteilung: **30.08.1995**
(21) Anmeldenummer: 92850090.9
(22) Anmeldetag: 23.04.1992
(51) Int. Cl.: H02G 1/12

(54) **Handzange zum Abisolieren von Leiterenden**
Hand pliers for stripping off conductor ends
Pince à main pour dénuder les extrémités de conducteurs

(30) Priorität: 04.05.1991 DE 4114563
(43) Veröffentlichungstag der Anmeldung: 11.11.1992
(73) Patentinhaber: Weidmüller Interface GmbH & Co., D-32760 Detmold (DE)
(72) Erfinder: Undin, Hans, S-184 00 Akersberga (SE)
(74) Vertreter: Klauber, Tomas

(56) Entgegenhaltungen:
- EP-A- 0 232 003
- DE-U- 8 623 554
- GB-A- 2 077 517

## Beschreibung

Die vorliegende Erfindung bezieht sich auf eine zum Abisolieren von Leiterenden bestimmte Handzange der im Oberbegriff des angeschlossenen Patentanspruchs 1 angeführter Art, die gegebenenfalls auch noch mit einer Abschneidevorrichtung versehen ist.

Eine derartige Zange ist in DE-C-24 02 187 beschrieben. Die Schneid- und Abstreiferbacken (im weiteren bloss "Backen") werden von einer Druckfeder dauernd voneinander gehalten und sind zwecks Verschieben im Klemmbackenpaar in Abstreifrichtung an ein längliches, von einem der Handgriffe mittels eines Antriebarmes beaufschlagbares Zugelement angeschlossen. Die Druckfeder ist eine in Bohrungen in den Innenseiten der beiden Backen vor ihrer Anschluss-Stelle verankerte Spiralfeder. (Mit "vor" bzw. "hinter" u.s.w. wird jeweils die Richtung zum freien Ende der Backen bzw. der Handgriffe hin verstanden.)

Eine der Backen ist einstückig, und die andere schwenkbar mit dem Zugelement verbunden. Das Zugelement weist ferner einen einstückig, d.h. starr, angeschlossenen Querarm auf, an dessen freiem Ende als Empfangsglied für die beaufschlagende Kraft eine frei drehbare Rolle angeordnet ist, die von einem in einem der Handgriffe schwenkbar gelagerten, federbelasteten Antriebsarm beaufschlagt wird, der an seinem freien Ende ebenfalls zumindest eine frei drehbar gelagerte Nockenrollen trägt.

Dieses Antriebsaggregat bzw. Backen-und-Zugelementaggregat (ferner bloss "Aggregat") umfasst somit zwei Glieder, nämlich das Zugelement mit dem Backenpaar, und den Antriebsarm. Bei dem vorbekannten Gerät umfassen diese zwei Glieder insgesamt zwölf Teile die separat hergestellt und dann zu den zwei Gliedern zusammengebaut werden müssen.

Für weitere Einzelheiten bezüglich der Konstruktion und Funktion der Zange, inkl. Kraftübertragung von einem der Handgriffe an eine der Klemmbacken, wird auf die DE-C-24 02 187 hingewiesen.

Der vorliegenden Erfindung liegt die Aufgabe zugrunde, bei einem Gerät der genannten Art die Konstruktion insbesondere durch Herabsetzung der Anzahl einzelner Bestandteile zu vereinfachen und zu verbilligen, und gleichzeitig bei unveränderten Ausmassen die maximale Abisolierlänge zu vergrössern. (Unter Abisolierlänge wird hierbei die Länge derjeningen Endpartie eines elektrischen Leiters verstanden, von der im betreffenden Gerät die Isolation abgestreift werden kann.)

Diese Aufgabe wird gemäss dem angeschlossenen Patentanspruch 1 gelöst, wobei in den angeschlossenen Unteransprüchen vorteilhafte Weiterentwicklungen angeführt sind. Im wesentlichen handelt es sich darum, dass das Zugelement und die beiden Backen einstückig aus Kunststoff hergestellt werden und mittels eines federnden, kreisbogenförmig nach vorne hin offenen Kunststoffgelenkes an das Zugelement angeschlossen werden, wobei vor diesem Gelenk kein weiteres, die Backen auseinander spreizendes Element angeordnet ist. Auch der Antriebsarm kann vorzugsweise als ein einziger Kunststoffteil hergestellt werden.

Wie bekannt, gibt es eine Anzahl von Kunststoffen, die druckfest sind und niedrige Friktion aufweisen (Polyamid, Polyäthylen, u.s.w.), so dass, wenn das Aggregat aus einem derartigen Kunststoff hergestellt wird, nicht nur die drehbare Rolle am Ende des Querarmes, sondern auch die Nockenrolle am Antriebsarm durch eine abgerundete Endpartie ersetzt werden können.

Die Anzahl der einzelnen Teile des vorbekannten Aggregats kann erfindungsgemäss beträchtlich vermindert werden, im Extremfall bis auf zwei, d.h. das jedes der beiden Glieder des Aggregats einstückig gestaltet, und somit in einer einzigen Fertigungsoperation herstellbar ist. Dadurch entfällt auch jedwede Montagearbeit im Rahmen des einzelnen Gliedes.

Durch den Fortfall der Druckfeder, und dank der Gestaltung des Kunststoffgelenkes zu einem nach vorne hin offenen Bogen, vor dem sich innerhalb der Backen kein weiteres Spreizelement befindet, kann die Abstreiflänge beim erfindungsgemässen Gerät im Vergleich mit dem vorbekannte Gerät bis um nahezu 50% vergrössert werden. Weitere Vorteile der Erfindung gehen aus der folgenden Beschreibung von Ausführungsbeispielen gemäss den beiliegenden Zeichnungen hervor.
Fig. 1 zeigt in Längsschnitt ein Gerät gemäss DE-C-24 02 187 und bezieht sich somit nicht unmittelbar auf die vorliegende Erfindung,
Fig. 2 zeigt in einer Seitenansicht in etwas grösserem Mass-Stab eine erste Ausführungsform eines erfindunsgemäss abgeänderten ersten Gliedes des Aggregates,
Fig. 3 zeigt in perspektivischer Ansicht eine erste Ausführungsform eines erfindungsgemäss abgeändertes zweites Gliedes des Aggregates,
Fig. 4 zeigt im Längsschnitt eine vorgezogene zweite Ausführungsform des zweiten Gliedes des Aggregates,
Fig. 5 zeigt einen vorderen Abschnitt eines erfindungsgemässen Gerätes mit dem zweiten Glied gemäss Fig. 4 an Stelle und einer Abschneidevorrichtung, und
Fig. 6 zeigt in perspektivischer Ansicht eine zweite Ausführugsform des ersten Gliedes.

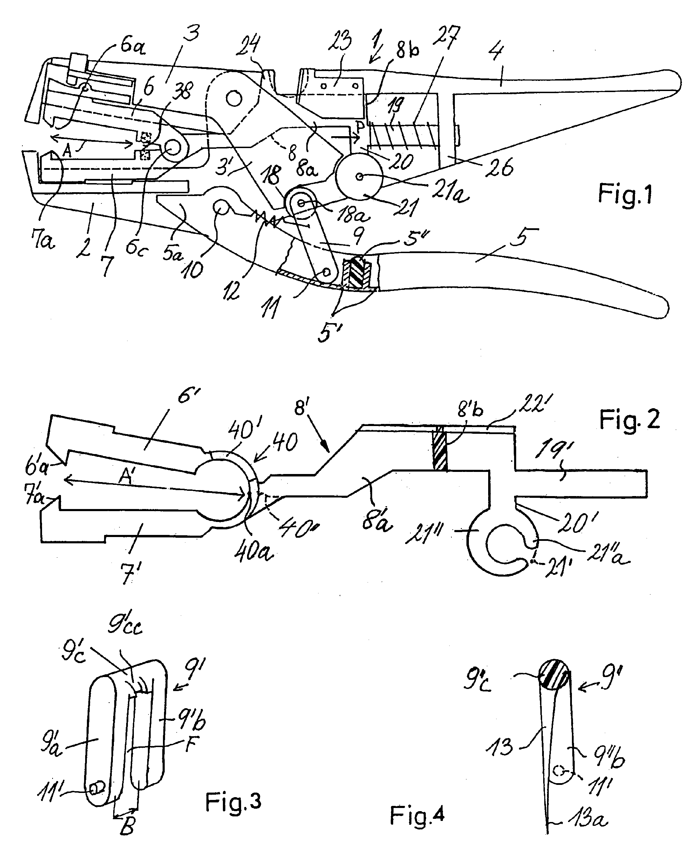

Nach Fig. 1 umfasst die vorbekannte Handzange zwei Klemmbacken 2, 3 (in Fig. 1 werden nach Möglichkeit die gleichen Bezugszeichen wie in DE-C-24 02 187 angewandt), zwei Schneid- und Abstreiferbacken 6, 7, und zwei Handgriffe 4, 5. Der erste Handgriff 4 und die Klemmbacke 2 sind einstückig ausgeführt und bilden einen Gerätekörper 1.

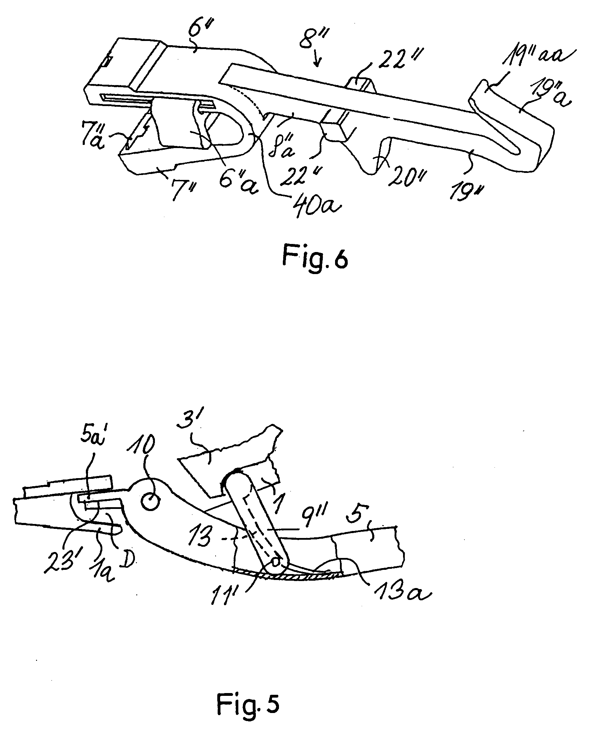

Die Backe 7 ist einstückig mit einem länglichen Zugelement 8 ausgeführt, und die Backe 6 ist mittels eines Drehzapfens 6c schwenkbar angelenkt. Eine in Bohrungen an den Innenseiten der Backen 6, 7 verankerte Spiralfeder 38 hält die Backen 6, 7 dauernd von einander, und presst sie an die benachbarten Klemmbacken 2, 3 an. An den freien Enden 6a, 7a der Backen 6, 7 sind in Fig. 1 nicht dargestellte Schneidorgane (Messerschneidenorgane) vorgesehen (siehe jedoch Fig. 6). Ein abzuisolierende Leiter kann bis zur maximalen Abisolierlänge A ins Gerät eingeführt werden um bearbeitet zu werden.

Das Zugelement 8 weist an seinem den Backen 6, 7 entgegengesetzten Ende ein stangenförmiges Endteil 19 auf, auf dem eine Druckfeder 27 aufgezogen ist, und welches gleich dem Rest des Zugelementes einen vorzugsweise viereckigen Querschnitt aufweist, und in einer Öffnung mit entsprechendem viereckigem Quer-schnitt in einer Querwand 26 gleitet, wodurch das Zugelement gegen Verdrehung gesichert ist.

Das Zugelement 8 weist ferner im Bereich des Endteiles 8 einen Querarm 20 auf, an dem mittels eines Drehzapfens 21a eine Rolle 21 drehbar angeordnet. Im zweiten Handgriff 5, der U-förmiges Profil aufweist, und mittels eines Schwenkzapfens 10 an den Gerätekörper 1 angeschlossen ist, ist mittels eines Drehzapfens 11 ein von einer Zugfeder 12 beaufschlagter Antriebsarm 9 schwenkbar gelagert. Am entgegengesetzten freien Ende des Antriebsarmes 9 ist mittels eines Drehzapfens 18a eine Nockenrolle 18 drehbar gelagert.

Beim Betätigen des zweiten Handgfriffes 5, der jenseits seiner Anlenkstelle 10 einen Ausläufer 5a aufweist, beaufschlägt die Nockenrolle 18 vorerst eine abgewinkelte hintere Verlängerung 3′ der Klemmbacke 3, und nachher die Rolle 21 des Zugelementes 8, wodurch dieses in Richtung des Pfeiles P verschoben wird.

Im Handgriff 5 ist ferner zwischen zwei Querwänden ein elastischer Klotz 5˝ angeordnet, an den die Nockenrolle 21 weich anstosst, wenn der Handgriff 5 seine vollkommen geschlossen Lage erreicht.

Das erste Glied des Aggregats umfasst somit die sieben Teile: Zugelement 8 mit Backe 7, Backe 6, Zapfen 6a, Feder 38, Rolle 21, Zapfen 21a und Feder 27. Das zweite Glied umfasst dann die fünf Teile: Arm 9, Zapfen 11, Rolle 18, Zapfen 18a und Feder 12.

Das Gerät weist ferner eine Abschneidevorrichtung zum Ablängen bearbeiteter Leiter auf, die aus einer am Gerätekörper 1 fest angeordneten Messerschneide 23 und einem als ein Vorsprung 24 am Zugelement 8 gestalteten stumpfen Andruckglied besteht.

Erfindungsgemäss wird das Aggregat zu einem einteiligen ersten Glied gemäss Fig. 2 oder 6, und einem einteiligen zweiten Glied gemäss Fig. 3 oder 4 umgewandelt. Beide Glieder bestehen ausschliesslich aus Kunststoff.

Das erste Glied 8′ umfasst die Backen 6′, 7′, einen Mittelteil 8′a mit einem Querarm 20′, und einen Abschlussteil 19′. Die Backen 6′, 7,′ sind mittels eines federnden Kunststoffgelenkes 40, welches eine nach vorne, d.h. zu den freien Enden 6′a, 7′a der Backen 6′, 7′ hin, offene kreisrunde Form aufweist, an das vordere Ende des Mittelteils 8′a angeschlossen. Unter "federnd" wird hierbei vestanden, dass das Gelenk so ausgelegt ist, dass sich die beiden Backen 6′, 7′ in unbeaufschlagtem Zustand in der dargestellten ausgeschwenkten Lage befinden, so dass sie nach dem Einbau in das Klemmbackenpaar 2, 3 jeweils an die benachbarte Klemmbacke angepresst werden.

Das Gelenk 40 ist in an sich bekannter Weise durch die in der Zeichnung ersichtliche Dimensionierung und Formgebung des Kunststoffkörpers entstanden, wobei im Umfangsbereich 40′ die Querschnittsfläche des Bogenteiles herabgesetzt ist, d.h. entwede die Breite (Ausmass rechtwinklig zur Zeichnungsebene), und/oder die Dicke herabgesetzt ist.

Es ist ferner offensichtlich, dass z.B. bei Änderung der Konturen des Anschlussteiles zwischen dem Gelenk 40 und dem Mittelteil 8′a gemäss der gestrichelten Linie 40˝ auch die andere Backe 7′ an den das Mitteteil 8′a gelenkig angeschlossen werden kann. Somit ist derjenige Umfangsteil des Gelenkes 40 federnd, der verminderte Querschnittsfläche aufweist und/oder der nicht an das Mittelteil 8′a angeschlossen ist.

Die maximale Abisolierlänge A′ des Gerätes ist beträchtlich grösser als beim Gerät gemäss Fig. 1, und zwar dank der Form des Kunststoffgelenkes 40, sowie dem Umstand, dass durch den Wegfall der Feder 38 zwischen diesem Gelenk und den vorderen freien Enden 6′a, 7′a der Backen 6′, 7′ innerhalb dieser Backen kein weiteres auseinander spreizendes Element vorhanden ist.

Das freie Ende des Querarmes 20′ ist abgerundet, bzw. wie eine - gestrichelt dargestellte - "drehfeste Rolle" 21′ gestaltet. In einer vorgzugsweisen Ausführungform wird diese drehfeste Rolle "abgefedert" gestaltet, indem sie als ein nachgiebig federnder Arm 21˝ gestaltet wird, welcher zumindest in dem Teil, welcher mit dem Antriebsarm 9′ in Berührung kommt, den äusseren Umriss der Rolle 21′aufweist. Ein Endanschlag 21˝a begrenzt in gewähltem Ausmass das Ausschwenken des federnden Armes 21˝.

Bei dieser Lösung kann, mit Beibehalten des weichen Anschlages, der elastische Klotz 5˝ im Handgriff 5, und somit ein weiterer separater Bestandteil entfallen. Als Anschlag für den Arm 21˝ kann z.B. eine der Querwände 5′ (in etwas dickerer Ausführung), oder jedes andere, im ersten Handgriff 5 einstückig mit-diesem vorgesehene Anschlagorgan dienen.

Durch - vorzugsweise beiderseitige - Verjüngung des Querschnittes 8′b des Mittelteiles 8′a z.B. entlang der einen Längskante wird ein als Führungsmittel zur Steuerung des ersten Teiles 8′ im Gerätekörper 1 dienender Führungskamm 22′ geschaffen, der eine entsprechenden Führungsnut im Gerätekörper 1 eingreift.

Das zweite Glied 9′ ist gemäss Fig. 3 wie ein Bügel in Form eines umgekehrten U mit einem Stegteil 9′c und zwei Schenkelteilen 9′a, 9′b gestaltet. Zwischen den beiden Schenkelteilen 9′a, 9′b weist das Glied 9′ einen Freiraum F mit der Breite B auf.

Zumindest an dem Teil des Umfanges des Stegteiles 9′c, der nach dem Zusammenbau mit einem anderen Bauteil wie Verlängerung 3′ und/oder Querarm 20′ zusammenarbeitet, ist eine Führungsnute 9′cc angeordnet, deren Breite der Dicke des bzw. der betreffenden zusammenarbeitenden Teile entspricht.

An den freien Enden der Schenkelteile 9′a, 9′b sin kurze nach aussen gerichtete Achsenstümpfe 11′ angeordnet. Das Glied 9′ wird derart in den zweiten Handgriff 5 mit U-förmigem Profil bzw. Querschnitt eingesetzt, dass die freien Enden der Schenkelteile 9′a, 9′b etwas zusammengedrückt werden, und die Achsenstümpfe 11′ von innen her in hierfür vorgesehene Öffnungen in den Wänden des U-Profils eingeführt werden.

In einer vorzugsweisen Ausführungsform gemäss Fig. 4, welche einen Längsschnitt dicht neben der inneren Wandung des Schenkelteils 9′a darstellt, wird der Bügel 9˝ einstückig mit einem Blattfederorgan 13 hergestellt, welches die Zugfeder 10 (Fig. 1) ersetzt, indem es in Einbaulage die in Fig. 5 ersichtliche Form einnimmt, wo es mit seinem freien Ende 13a tangential am Boden dess U-Profiles des zweiten Handgriffs 5 frei anliegt.

Das Blattfederorgan 13 überragt die freien Enden der Schenkelteile 9′a, 9′b, verjüngt sich im Querschnitt zu diesen freien Ende 13a hin, und weist zumindest im Bereiche neben der Achsenstümpfen 11′ eine kleinere Breite als die Breite B (Fig. 3) auf, um das oben beschriebene Einsetzen des Bügels 9˝ in den ersten Handgriff 5 zu ermöglichen.

Das Blattfederorgan 13 wird vorzungsweise im mittleren Freiraum F, und unmittelbar im Anschluss an den Stegteil 9˝c vorgesehen, es kann aber auch an beliebiger andrer Stelle des Antriebshebels 9˝ an diesen angeschlossen sein, z.B. näher den Achsenstümpfen 11˝ angesetzt werden, sowohl im mittleren Freiraum F, wie auch an einem oder an beiden Schenkelteilen.

In einer weiteren vorzugsweisen Ausführungsform gemäss Fig. 5 wird eine Abschneidevorrichtung derart angeordnet, dass ein bereits vorhandener Ausläufer 5a′ des ersten Handgriffes 5 jenseits seiner Anlenkstelle 10 an den Gerätekörper 1 mit einem Abschneidmesser 23′ versehen, und im Gerätekörper 1 eine von einem starren Ausläufer 1a begrenzte Aussparung D vorgesehen wird. In kinematischer Umkehrung gegenüber der vorbekannten Ausführungsform nach Fig. 1 übernimmt der Ausläufer 1a die Funktion des stumpfen Andruckgliedes 24, und das Abschneidemesser 23′, welches nun unmittlebar, d.h. ohne zwischengeschaltete Elemente, vom Handgriff 5 beaufschlagt wird, diejenige des Abschneidemessers 23.

Natürlich kann aber auch ein Messerorgan am unbeweglichen Ausläufer 1a angeordnet werden, und der schwenkbare Ausläufer 5a des Handgriffes 5 zu einem stumpfen Andruckglied gestaltet werden.

In der Ausführungsform nach Fig. 6 entfällt auch die Feder 27 (Fig. 1), indem beim ersten Teil 8˝ die Endpartie des Abschlussteiles 19˝ als ein zurückgebogener, federnder Haken 19˝a gestaltet ist, der sich nach dem Einbau in den Gerätekörper 1 mit seinem äussersten Ende 19˝aa an einem im Gerätekörper vorgesehenen Anschlagelement abstützt um den ersten Teil 8′ gleich der Feder 27 dauernd im Sinne einer Vorwärtsbewegung zu beaufschlagen. Der Querarm 20˝ weist einen abgerundeten, starren Endteil auf.

Der federnde Teil des Gelenkes 40a besteht aus demjenigen Teil, der nicht an den Mittelteil 8˝a angeschlossen ist, also der die Backe 7˝ mit dem Schneidorgan 7˝a trägt. In der Backe 6˝a ist gleitend ein Endanschlagelement 6˝a angeordnet zum Einstellen einer kleineren als maximalen Abisolierlänge.

Die Führungsmittel zum Steuern des zweiten Teiles 8˝ im Gerätekörper 1 bestehen aus beiderseits seitllich herausragenden Blöcken 22˝ für die im Geräteköper 1 entsprechende Führungsnuten vorgesehen sind.

Der Einbau der erfindunsgemässen Aggregatteile 8′, 8˝, 9′, 9˝ in den Gerätekörper 1, sowie deren Arbeitsweise darin, ist gleich wie einleitungsweise (und ausführlicher in DE-C-24 02 187) beschrieben ist.

## Patentansprüche

1. Handzange zum Abisolieren von Leiterenden, mit einem Paar Handgriffe (4,5), einem Paar zu- und voneinander verschwenkbarer Klemmbacken (2,3) und einem Paar innerhalb des Klemmbackenpaares zu- und voneinander verschwenkbar, federnd an die Klemmbacken anpreßbar und längsverschiebbar in Abstreifrichtung angeordneter Schneid- und Abstreiferbacken (6′,6˝,7′,7˝), wobei zur genannten Längsverschiebung der Schneid- und Abstreiferbacken ein zweigliedriges Aggregat vorgesehen ist, umfaßend ein ein längliches Zugelement bildendes erstes Glied (8′,8˝) mit dem eine der Schneid- und Abstreiferbacken, sowie ein starr angeschlossener Querarm (20′,20˝) einstückig ausgeführt sind und an das die andere Schneid- und Abstreiferbacke schwenkbar angeschlossen ist, sowie ein zweites Glied (9′,9˝) welches einen schwenkbar gelagerten Antriebsarm bildet, wobei die genannten Quer- und Antriebsarme zum zeitweiligen gegenseitigen Eingriff angeordnet sind, **dadurch gekennzeichnet,** daß das erste Glied (8′,8˝) aus Kunststoff einstückig mit beiden Schneid- und Abstreiferbacken (6′,7′,6˝, 7˝) hergestellt ist und im Anschluß an zumindest eine der Schneid- und Abstreiferbacken (6′, 7′,6˝, 7˝) ein federndes, bogenförmig nach vorne zu den freien Enden (6′a, 7′a) der Backen (6′, 7′) hin offenes Kuntsstoffgelenk (40,40a) aufweist, wobei innerhalb des Schneid- und Abstreiferbackenpaares (6′,7′,6˝, 7˝) zwischen den genannten freien Enden (6′a,7′a) und dem Kunststoffgelenk (40,40a) kein weiteres die Schneid- und Abstreiferbacken auseinander spreizendes Element vorhanden ist.

2. Handzange nach Anspruch 1, **dadurch gekennzeichnet,** daß das erste Glied (8′,8˝) einen stangenförmigen, länglichen Mittelteil (8′a,8˝a) aufweist der an seinem einen Ende das Kunststoffgelenk (40,40′) trägt, von dem der Querarm (20′,20˝) seitwärts herausragt, und der in einen stangenförmigen Abschlußteil (19′,19˝) übergeht, und daß das bogenförmige Kunststoffgelenk (40,40′), welches an den beiden Enden seiner Bogenform je eine der Schneid- und Abstreiferbacken (6′,7′, 6˝, 7˝) trägt, so ausgelegt ist, daß nach dem Einbau des Schneid- und Abstreiferbakkenpaares (6′,7′,6˝, 7˝) in das Klemmbackenpaar jede der Schneid- und Abstreiferbacken (6′,7′,6˝, 7˝) dauernd an die benachbarte Klemmbacke (2,3) angepreßt wird.

3. Handzange nach Anspruch 1 oder 2, **dadurch gekennzeichnet,** dass der federnde Teil des Gelenkes (40) von einem Teil (40′) mit verminderter Querschnittsfläche gebildet ist.

4. Handzange nach Anspruch 1 oder 2, **dadurch gekennzeichnet,** dass der federnde Teil des Gelenkes (40, 40a) von dem Teil gebildet ist, der nicht an das Mittelteil (8′a, 8˝a) angeschlossen ist.

5. Handzange nach einem der vorhergehenden Patentansprüche, **dadurch gekennzeichnet,** dass die Endpartie des Abschlussteiles (19˝) als ein zurückgebogener, federnder Haken (19˝a) gestaltet ist, der sich nach dem Einbau in den Gerätekörper (1) an einem darin vorgesehenen Anschlagelement abstützt um den ersten Teil (8˝) dauernd im Sinne einer Vorwärtsbewegung zu beaufschlagen.

6. Handzange nach einem der vorhergehenden Patentansprüche, **dadurch gekennzeichnet,** dass der Antriebsarm (9′, 9˝) als ein Bügel mit zwei parallel im Abstand (B) verlaufenden, an ihren ersten Ende mittels eines Stegteiles (9′c) verbunden Schenkelteilen (9′a, 9′b, 9˝b) gestaltet ist, wobei an den freien zweiten Enden der Schenkelteile (9′a, 9′b) nach aussen hin herausragande kurze Achsenstümpfe (11′), und vorzugsweise, im, Anschluss an beliebige Stelle des Antriebsarms (9˝), zumindest ein federndes, die freien Enden der Schenkelteile (9˝b) überragendes Blattfederorgan (13) vorgesehen sind, und der ganze Antriebsarm mit allen genannten Elementen einstückig aus Kunststoff hergestellt ist.

7. Handzange nach Anspruch 6, **dadurch gekennzeichnet,** dass das Blattfederorgan (13) als eine aus dem Stegteil (9˝c) im Zwischenraum (F) zwischen den beiden Schenkeln (9˝b) herausragende, im wesentlichen parallel mit den Schenkelteilen sich erstreckende Zunge gestaltet ist, die zumindest im Bereich der freien Enden der Schenkel schmaler als der genannte Zwischenraum (F) ist, und die sich vorzugsweise zum freien Ende hin im Querschnitt verjüngt.

8. Handzange nach Anspruch 6 oder 7, **dadurch gekennzeichnet,** dass entlang zumindest eines Teiles des Umfanges des Stegteiles (9′c) eine Führungsspur (9′cc) für einen zusammenarbeitenden Bauteil vorgesehen ist.

9. Handzange nach einem der vorhergehenden Patentansprüche, **dadurch gekennzeichnet,** dass das freie Ende des Querarmes (20′) als eine drehfeste, und vorzugsweise federnd gestaltete Rolle (21′, 21˝) ausgeführt ist.

10. Handzange nach einem der vorhergehenden Patentansprüche, die mit einer in einer Aussparung (D) im Gerätekörper (1) angeordneten Abschneidevorrichtung versehen ist, welche zwei zueinander bewegbare Glieder aufweist, nämlich ein Abschneidemesser (23′) und ein stumpfes Andruckglied, **dadurch gekennzeichnet,** dass eines der Glieder an einem Ausläufer (5a′) des ersten Handgriffes (5) jenseits dessen Anlenkstelle (10) an den Gerätekörper (1), und das andere Glied an einem starren Ausläufer (1a) des Gerätekörpers (1), welcher die genannte Aussparung (D) begrenzt, angeordnet ist.

## Claims

1. Hand pliers for stripping off conductor ends, with a pair of handles (4, 5), a pair of clamping jaws (2, 3) which are pivotable towards and away from one another, and a pair of cutting and stripping jaws (6′, 6˝, 7′, 7˝) which inside the clamping jaws are pivotable towards and away from one another, are resiliently urged onto the clamping jaws, and are longitudinally movable in the stripping direction, a two-members aggregate being provided for said longitudinal movement of the cutting and stripping jaws which comprises a first member (8′, 8˝) defining a longitudinal pulling means with which one of the cutting and stripping jaws, as well as a rigidly attached transverse arm (20′, 20˝) are made in one piece, and to which the other cutting and stripping jaw is pivotally attached, and a second member (9′, 9˝) which defines a pivotably mounted driving lever, the said transverse arm and the said driving lever being adapted for temporary mutual engagement,
**characterized by**
the first member (8′, 8˝) being made of plastics and in one piece with the two cutting and stripping blades (6′, 7′, 6˝, 7˝), and provided, in connection with at least one of the cutting and stripping jaws (6′, 7′, 6˝, 7˝), with a resilient plastics joint 40, 40a) in the shape of a forwardly towards the free ends (6′a, 7′a) of the jaws (6′, 7′) open arc, no further element urging the cutting and stripping jaws apart being located within the pair of the cutting and stripping jaws between the said free ends (6′a, 7′a) and the plastics joint (40, 40a).

2. Hand pliers according to claim 1, **characterized by** the first member (8′, 8˝) having a rod-shaped, elongated central part (8′a, 8˝a) which carries the plastics joint (40, 40′) at one its end, a transverse arm (20′, 20˝) laterally projecting from the central part and the central part passing into a rod-shaped tail part (19′, 19˝), and by the arcuate plastics joint (40, 40′), which on each end of its arcuate shape carries one of the cutting and stripping jaws, being designed so that, when the pair of the cutting and stripping jaws (6′, 7′, 6˝, 7˝) has been mounted in the pair of clamping jaws, each of the cutting and stripping jaws (6′, 7′, 6˝, 7˝) is constantly urged towards its adjacent clamping jaw (2, 3).

3. Hand pliers according to claim 1 or 2, **characterized by** the resilient portion of the joint (40) being embodied by a portion (40′) which has reduced cross-sectional area.

4. Hand pliers according to claim 1 or 2, **characterized by** the resilient portion of the joint (40, 40a) being embodied by the portion which is not attached to the central part (8′a, 8˝a).

5. Hand pliers according to one of the preceding claims, **characterized by** the terminal portion of the tail part (19˝) being formed as a rearwardly bent, resilient hook (19˝a) after mounting into the tool body bears against an abutment element provided there, so that the first member (8˝) is constantly urged in the sense of a forward movement.

6. Hand pliers according to one of the preceding claims, **characterized by** the driving lever (9′, 9˝) being embodied by a yoke with two parallelly extending, spaced apart (B) shank parts (9′a, 9′b, 9˝b) which at their first ends are connected by a bridging part (9′c), outwardly projecting short axle stubs (11′) being provided at the free second ends of the shank parts (9′a, 9′b), and at least one resilient leaf spring means (13) which projects beyond the free ends of the shank parts (9˝b) being provided preferably in attachment to an arbitrary place on the driving lever (9˝), the entire driving lever with all said elements being made in one piece of plastics material.

7. The hand pliers of claim 6, **characterized by** the leaf spring means ((13) being embodied by a tongue which in the interspace (F) between the two shanks (9˝b) projects from the bridging part (9˝c), extending essentially parallel with the shank parts, and which at least in the region of the free ends of the shanks is narrower than the said interspace (F) and preferably narrows in cross-section towards its free end.

8. The hand pliers according to claim 6 or 7, **characterized by** a guiding groove (9′cc) for a co-operating construction part being provided along at least a part of the circumference of the bridging part (9′c).

9. Hand pliers according to one of the preceding claims, **characterized by** the the free end of the transverse arm (20′) being shaped as non rotatable, and preferably resiliently formed roller (21′, 21˝).

10. Hand pliers according to one of the preceding claims, provided with a cutting means located in a recess (D) in the tool body (1) and comprising two members which may be moved towards one another, viz. a cutting knife (23′) and a blunt abutment piece, **characterized by** one of said members being mounted on an extension (5a′) of the first handle (5) beyond its point of articulation (10) to the tool body (1), and the other member on a rigid arm (1a) of the tool body (1) which limits the said recess (D).

## Revendications

1. Pince manuelle pour dénuder des extrémités de conducteurs, comprenant une paire de branches (4, 5), une paire de becs de serrage (2, 3) pouvant être approchés et écartés l'un de l'autre par pivotement et une paire de becs de coupe et de dénudage (6′, 6˝, 7′, 7˝) qui sont disposés de manière à pouvoir être approchés et écartés l'un de l'autre en pivotant à l'intérieur de la paire de becs de serrage, de manière à pouvoir être pressés élastiquement contre les becs de serrage et à pouvoir se déplacer longitudinalement dans la direction de dénudage, une unité à deux éléments étant prévue pour le déplacement longitudinal mentionné des becs de coupe et de dénudage, laquelle unité comprend un premier élément (8′, 8˝) formant un élément de traction allongé avec lequel sont réalisés d'un seul tenant l'un des becs de coupe et de dénudage ainsi qu'un bras transversal (20′, 20˝) raccordé rigidement et auquel l'autre bec de coupe et de dénudage est raccordé de manière à pouvoir pivoter, ainsi qu'un deuxième (9′, 9˝) qui forme un bras d'entraînement monté pivotant, le bras transversal et le bras d'entraînement mentionnés étant disposés de manière à pouvoir être mutuellement en prise temporairement, **caractérisée** par le fait que le premier élément (8′, 8˝) est réalisé en matière plastique d'un seul tenant avec les deux becs de coupe et de dénudage (6′, 7′, 6˝, 7˝) et présente, à la suite d'au moins l'un des becs de coupe et de dénudage (6′, 7′, 6˝, 7˝), une articulation en matière plastique (40, 40a) élastique, ouverte en forme d'arc vers l'avant en direction des extrémités libres (6′a, 7′a) des becs (6′, 7′), aucun autre élément écartant les becs de coupe et de dénudage l'une de l'autre n'étant prévu à l'intérieur de la paire de becs de coupe et de dénudage (6′, 7′, 6˝, 7˝), entre les extrémités libres (6′a, 7′a) mentionnées et l'articulation en matière plastique (40, 40a).

2. Pince manuelle selon la revendication 1, **caractérisée** par le fait que le premier élément (8′, 8˝) présente une partie médiane (8′a, 8˝a) allongée en forme de barre qui, à l'une de ses extrémités, porte l'articulation en matière plastique (40, 40′) de laquelle dépasse latéralement le bras transversal (20′, 20˝) et qui se prolonge par une partie terminale (19′, 19˝) en forme de barre et que l'articulation en matière plastique (40, 40′) en forme d'arc, qui porte un bec de coupe et de dénudage (6′, 7′, 6˝, 7˝) à chacune des deux extrémités de sa forme arquée, est conçue de manière à ce qu'après le montage de la paire de becs de coupe et de dénudage (6′, 7′, 6˝, 7˝) dans la paire de becs de serrage, chacun des becs de coupe et de dénudage (6′, 6˝, 7′, 7˝) soit pressé durablement contre le bec de serrage (2, 3) voisin.

3. Pince manuelle selon la revendication 1 ou 2, **caractérisée** par le fait que la partie élastique de l'articulation (40) est formée par une partie (40′) de section transversale réduite.

4. Pince manuelle selon la revendication 1 ou 2, **caractérisée** par le fait que la partie élastique de l'articulation (40, 40a) est formée par la partie qui n'est pas raccordée à la partie médiane (8′a, 8˝a).

5. Pince manuelle selon l'une des revendications précédentes, **caractérisée** par le fait que la partie terminale de la pièce terminale (19˝) est réalisée sous la forme d'un crochet (19˝a) élastique recourbé qui, après le montage dans le corps d'appareil (1), prend appui contre un élément de butée prévu dans ce corps pour solliciter durablement le premier élément (8˝) dans le sens d'un déplacement vers l'avant.

6. Pince manuelle selon l'une des revendications précédentes, **caractérisée** par le fait que le bras d'entraînement (9′, 9˝) est réalisé sous la forme d'un étrier comportant deux branches (9′a, 9′b, 9˝b) qui s'étendent parallèlement à une distance (B) et sont reliées au niveau de leur première extrémité au moyen d'une barrette (9′c), les deuxièmes extrémités libres des branches (9′a, 9′b) comportant des bouts d'axes (11′) courts faisant saillie vers l'extérieur et au moins un organe à ressort à lames (13) élastique dépassant des extrémités libres des branches (9˝b) étant de préférence prévu à la suite, à n'importe quel endroit du bras d'entraînement (9˝) et l'ensemble du bras d'entraînement étant fabriqué en matière plastique d'un seul tenant avec tous les éléments mentionnés.

7. Pince manuelle selon la revendication 6, **caractérisée** par le fait que l'organe à ressort à lames (13) est réalisé sous la forme d'une languette dépassant de la barrette (9˝c) dans l'espace intermédiaire (F) entre les deux branches (9˝b) et s'étendant sensiblement parallèlement aux branches, laquelle languette est plus étroite que l'espace intermédiaire (F) mentionné, au moins dans la zone des extrémités libres des branches et a une section transversale qui se rétrécit de préférence vers l'extrémité libre.

8. Pince manuelle selon la revendication 6 ou 7, **caractérisée** par le fait qu'une voie de guidage (9′cc) pour une pièce qui coopère est prévue le long d'au moins une partie du pourtour de la barrette (9′c).

9. Pince manuelle selon l'une des revendications précédentes, **caractérisée** par le fait que l'extrémité libre du bras transversal (20′) est réalisée sous la forme d'un galet (21′, 21˝) solidaire en rotation et de préférence élastique.

10. Pince manuelle selon l'une des revendications précédentes pourvue d'un dispositif de tranchange qui est disposé dans un évidement (D) dans le corps d'appareil (1) et présente deux organes mobiles l'un vers l'autre, à savoir une lame de tranchage (23′) et un organe de pression émoussé, **caractérisée** par le fait que l'un des organes est disposé sur une ramification (5a′) de la première branche (5), au-delà du point d'articulation (10), de cette dernière sur le corps d'appareil (1) et que l'autre organe est disposé sur une ramification (1a) rigide du corps d'appareil (1) qui limite l'évidement (D) mentionné.
